# EUROPEAN PATENT APPLICATION

(11) **EP 3 093 510 A1**
(43) Date of publication of application: **16.11.2016**
(21) Application number: 15735095.0
(22) Date of filing: 08.01.2015
(51) Int. Cl.: F16B 47/00

(54) **VACUUM ADSORPTION APPARATUS**

(30) Priority: 08.01.2014 KR 20140002214; 23.06.2014 KR 20140076202
(71) Applicant: Koo, Hong Sik, Seoul 150-096 (KR)
(72) Inventor: Koo, Hong Sik, Seoul 150-096 (KR)
(74) Representative: Nederlandsch Octrooibureau
(86) International application number: PCT/KR2015/000169
(87) International publication number: WO 2015/105338

(57) **Abstract**

A vacuum adsorption apparatus is disclosed. The vacuum adsorption apparatus includes a suction member that is brought into vacuum-suction contact with an attachment surface by a vacuum chamber formed therein and an adjustment member that is coupled to the suction member to form the vacuum chamber. The suction member includes a first hard-material portion that is coupled to the adjustment member and that is raised by the adjustment member, a deformable portion of which one end is connected to an end of the first hard-material portion and that is deformable in shape, and a second hard-material portion that is connected to the other end of the deformable portion to support the deformable portion and is located outside the first hard-material portion.

## Description

### Technical Field

The present invention relates to a vacuum adsorption apparatus (which may also be referred to as a vacuum suction apparatus or device), and more particularly, to a vacuum adsorption apparatus with a simple structure.

### Background Art

A vacuum adsorption apparatus means a device that can be attached to another object by vacuum generated in the device. Such a vacuum adsorption apparatus is mainly used to attach a certain object to glass, tiles, or the like without using a nail, an adhesive, or the like.

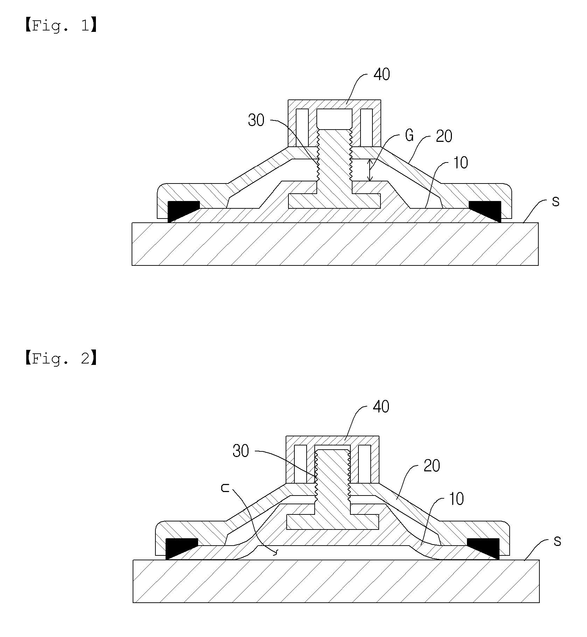

FIGS. 1 and 2 are cross-sectional views illustrating a vacuum adsorption apparatus according to the related art, where FIG. 1 illustrates a state in which a suction plate 10 is flatly brought into close contact with an attachment surface s and FIG. 2 illustrates a state in which the suction plate 10 rises to form a vacuum chamber c between the suction plate 10 and the attachment surface s.

Referring to FIGS. 1 and 2, the vacuum adsorption apparatus according to the related art includes a soft suction plate 10 that is brought into close contact with an attachment surface S, a hard pressing cap 20 that covers the suction plate 10 with a predetermined gap G at the center while pressing a top edge portion of the suction plate 10, a pulling rod 30 that is disposed at the center of the top surface of the suction plate 10 and penetrates the pressing cap 20, and a fastening tool 40 that is screwed to the pulling rod 30 to pull upward the pulling rod 30 by rotation.

When the suction plate 10 is brought into close contact with the attachment surface s and then the fastening tool 40 is rotated while pressing the pressing cap 20 downward, the pulling rod 30 screwed to the fastening tool 40 rises to form a vacuum chamber c in an extra-low pressure state between the attachment surface s and the suction plate. The vacuum adsorption apparatus is suctioned to the attachment surface s by a vacuum suction force of the vacuum chamber c formed in this way.

The vacuum adsorption apparatus according to the related art includes the soft suction plate 10 which is formed of a rubber material which can freely contract and extend, the pressing cap 20 and the pulling rod 30 which are formed of a hard material, and the fastening tool 40 that is screwed to the pulling rod 30 and formed of a hard material. Particularly, since the soft suction plate 10 and the hard pulling rod 30 are different from each other in material, the suction plate and the pulling rod should be manufactured separately and then should be coupled to each other. Accordingly, there is a problem in that a manufacturing cost increases and a manufacturing time also increases.

### Citation List

### Patent Literature

Korean Unexamined Utility Model Application Publication No. 20-2010-0003866

### Summary of the Invention

### Technical Problem

Therefore, the present invention is conceived to solve the above-mentioned problem and is directed to providing of a vacuum adsorption apparatus with a simple structure which can reduce manufacturing cost and time.

Other objects of the present invention will be more apparent from embodiments to be described below.

### Solution to Problem

According to an aspect of the present invention, there is provided a vacuum adsorption apparatus including: a suction member that is brought into vacuum-suction contact with an attachment surface by a vacuum chamber formed therein; and an adjustment member that is coupled to the suction member to form the vacuum chamber, wherein the suction member includes a first hard-material portion that is coupled to the adjustment member and that is raised by the adjustment member, a deformable portion of which one end is connected to an end of the first hard-material portion and that is deformable in shape, and a second hard-material portion that is connected to the other end of the deformable portion to support the deformable portion and is located outside the first hard-material portion.

The vacuum adsorption apparatus according to the aspect of the present invention may have one or more of the following features. For example, an adjustment protrusion may be formed to protrude from the first hard-material portion, and the adjustment member may be coupled to the adjustment protrusion by a screw of a pin or is integrally formed with the adjustment protrusion by injection molding.

The deformable portion may have a thickness smaller than that of the first hard-material portion or the second hard-material portion so as to be deformable in shape.

The first hard-material portion, the deformable portion, and the second hard-material portion may be integrally formed of the same material by injection molding.

An end of the suction member may be coupled to packing or be coated with a gel.

The deformable portion may be connected to the second hard-material portion via a rotation point and the first hard-material portion may be located lower than the rotation point.

The deformable portion may be connected to the first hard-material portion and may have a curved shape.

According to another aspect of the present invention, there is provided a vacuum adsorption apparatus including: a cap that includes a packing stop; a packing that comes in contact with the packing stop and an attachment surface; a suction portion that includes a pressing end for pressing the packing located in the packing stop and that is brought into vacuum-suction contact with the attachment surface by a vacuum chamber formed between the attachment surface and the pressing portion; and a pressing portion that causes the suction portion to move upward to form the vacuum chamber.

The vacuum adsorption apparatus according to another aspect of the present invention may have one or more of the following features. For example, the suction portion may press the packing upward and outward.

### Advantageous Effects of the Invention

According to the present invention, it is possible to provide a vacuum adsorption apparatus with a simple structure which can reduce manufacturing costs and time.

### Brief Description of the Drawings

FIG. 1 is a cross-sectional view illustrating a vacuum adsorption apparatus according to the related art and illustrating a state in which a suction plate is brought into close contact with an attachment surface.
FIG. 2 is a cross-sectional view illustrating the vacuum adsorption apparatus according to the related art and illustrating a state in which the suction plate is separated from the attachment surface.
FIG. 3 is a perspective view illustrating a vacuum adsorption apparatus according to a first embodiment of the present invention.
FIG. 4 is a top view of the vacuum adsorption apparatus illustrated in FIG. 3.
FIG. 5 is a cross-sectional view of the vacuum adsorption apparatus taken along line A-A in FIG. 3.
FIG. 6 is a cross-sectional view illustrating a state in which a first hard-material portion rises to form a vacuum chamber in FIG. 5.
FIGS. 7 and 8 are cross-sectional views illustrating a vacuum adsorption apparatus according to a second embodiment of the present invention.
FIGS. 9 and 10 are cross-sectional views illustrating a vacuum adsorption apparatus according to a third embodiment of the present invention.
FIG. 11 is a cross-sectional view illustrating a vacuum adsorption apparatus taken according to a fourth embodiment of the present invention.
FIG. 12 is a perspective view illustrating a suction portion of the vacuum adsorption apparatus illustrated in FIG. 11.
FIG. 13 is a cross-sectional view illustrating a cap of the vacuum adsorption apparatus illustrated in FIG. 11.
FIG. 14 is a cross-sectional view illustrating a packing of the vacuum adsorption apparatus illustrated in FIG. 11.
FIG. 15 is a cross-sectional view illustrating a state in which the suction portion moves upward from the state illustrated in FIG. 11 to form a vacuum chamber.
FIG. 16 is a cross-sectional view illustrating a vacuum adsorption apparatus taken according to a fifth embodiment of the present invention.

### Description of Embodiments

The invention can be modified in various forms and can have various embodiments. Specific embodiments will be illustrated in the drawings and described in detail. However, the embodiments are not intended to limit the invention, but it should be understood that the invention includes all modifications, equivalents, and replacements belonging to the concept and the technical scope of the invention. When it is determined that detailed description of known techniques involved in the invention makes the gist of the invention obscure, the detailed description thereof will not be made.

The terms used in the following description are intended to merely describe specific embodiments, but not intended to limit the invention. An expression of the singular number includes an expression of the plural number, so long as it is clearly read differently. The terms such as "include" and "have" are intended to indicate that features, numbers, steps, operations, elements, components, or combinations thereof used in the following description exist and it should thus be understood that the possibility of existence or addition of one or more other different features, numbers, steps, operations, elements, components, or combinations thereof is not excluded.

Terms such as first and second can be used to describe various elements, but the elements should not be limited to the terms. The terms are used only for distinguishing one element from another element.

Hereinafter, embodiments of the invention will be described in detail with reference to the accompanying drawings. In describing the invention with reference to the accompanying drawings, like elements are referenced by like reference numerals or signs regardless of the drawing numbers and description thereof is not repeated.

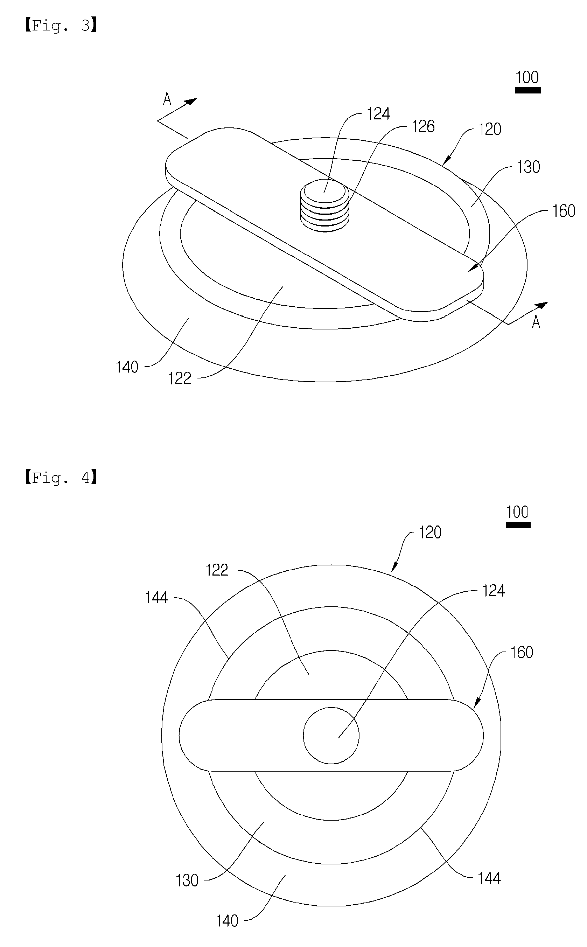

Hereinafter, a vacuum adsorption apparatus 100 according to a first embodiment of the present invention will be described with reference to FIGS. 3 to 6.

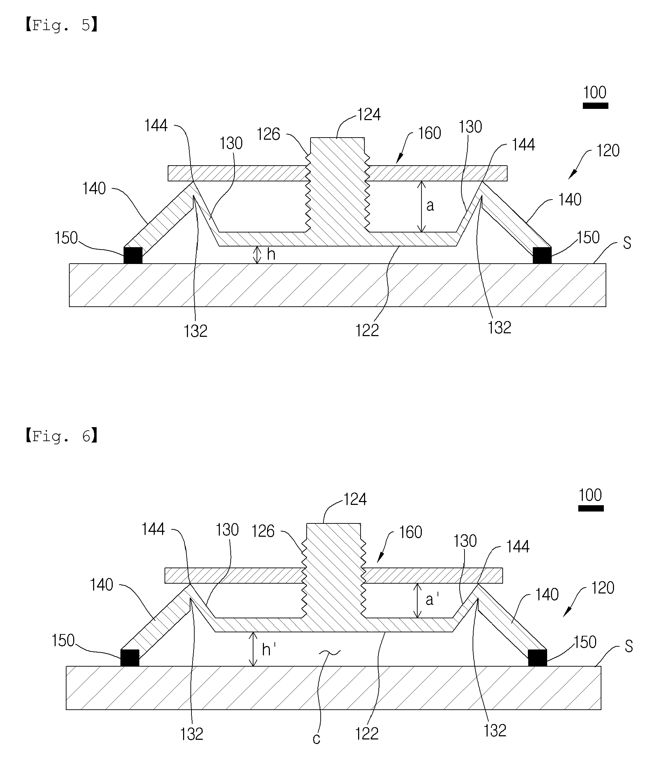

FIG. 3 is a perspective view illustrating the vacuum adsorption apparatus 100 according to the first embodiment of the present invention. FIG. 4 is a top view of the vacuum adsorption apparatus 100 illustrated in FIG. 3. FIG. 5 is a cross-sectional view of the vacuum adsorption apparatus 100 taken along line A-A in FIG. 3. FIG. 6 is a cross-sectional view illustrating a state in which a first hard-material portion 122 rises to form a vacuum chamber in FIG. 5.

Referring to FIGS. 3 to 6, the vacuum adsorption apparatus 100 according to the first embodiment includes a suction member 120 that is brought into vacuum-suction contact with an attachment surface s by a vacuum chamber c which is formed therein and an adjustment member 160 that is coupled to the suction member 120 to form the vacuum chamber c. The adjustment member 160 pulls a first hard-material portion 122 of the suction member 120 upward by rotation. Accordingly, an internal space of the suction member 120 is enlarged to form the vacuum chamber c in an extra-low pressure state and the suction member 120 is brought into close contact with the attachment surface s.

In this way, the vacuum adsorption apparatus 100 according to the first embodiment includes two members of the suction member 120 and an adjustment protrusion 124 and thus has a merit that a configuration is simple. Particularly, since the suction member 120 is integrally formed of a single material, it is possible to achieve an effect that manufacturing cost and time can be reduced.

The suction member 120 is brought into vacuum-suction contact with the attachment surface s by a vacuum suction force which is formed by the vacuum chamber c therein. The suction member 120 includes a circular first hard-material portion 122 that is located at the center thereof, a ring-shaped deformable portion 130 that is formed around the first hard-material portion 122, a ring-shaped second hard-material portion 140 that is formed around the deformable portion 130, and packing 150 that is coupled to the lower end of the second hard-material portion 140.

The suction member 120 in this embodiment is exemplified to be circular, but the suction member may have shapes such as an elliptical shape and a polygonal shape. The present invention is not limited by the shape of the suction member 120.

The first hard-material portion 122, the deformable portion 130, and the second hard-material portion 140 may be integrally formed of the same material. For example, the suction member 120 may be integrally formed of a polypropylene resin by injection molding. The first hard-material portion 122 and the second hard-material portion 140 may be thicker than that of the deformable portion 130. For example, the first hard-material portion 122 and the second hard-material portion 140 may have a thickness of about 3 mm and the deformable portion 130 formed of the same material may have a thickness of about 0.1 mm to 0.7 mm.

In addition, the first hard-material portion 122 and the second hard-material portion 140 may be formed relatively thin. Particularly, the second hard-material portion 140 may be formed thin and then the position and the shape thereof may be maintained using another member such as a cover (not illustrated) that is coupled to the top of the suction member 120. The first hard-material portion 122 may also be formed relatively thin.

The first hard-material portion 122 and the second hard-material portion 140 have characteristics that deformation thereof will not be easily caused by an external force. Accordingly, even when the adjustment member 160 rotates, the first hard-material portion 122 and the second hard-material portion 140 are hardly deformed in shape. Here, the first hard-material portion 122 is coupled to the adjustment member 160 and is raised by the rotation of the adjustment member 160 or is lowered by a restoring force of the deformable portion 130.

The first hard-material portion 122 is located at the center of the suction member 120 and has a disk shape. Since the deformable portion 130 which is deformable in shape is coupled to the periphery of the first hard-material portion 122, the first hard-material portion 122 can be raised or lowered. The first hard-material portion 122 is raised by the rotation of the adjustment member 160. A vacuum chamber c is formed in the suction member 120 by the raising of the first hard-material portion 122 to generate a vacuum suction force. The first hard-material portion 122 is lowered by the restoring force of the deformable portion 130.

The adjustment protrusion 124 is formed at the center of the first hard-material portion 122. The adjustment protrusion 124 has a constant length and a thread 126 is formed on the periphery thereof. The adjustment member 160 is screwed to the adjustment protrusion 124. The adjustment member 160 moves upward or downward in the length direction of the adjustment protrusion 124 by the rotation thereof to directly raise the first hard-material portion 122 or to remove a force for pulling the first hard-material portion upward to lower the first hard-material portion.

The deformable portion 130 serves to connect the first hard-material portion 122 and the second hard-material portion 140. The deformable portion 130 is integrally formed of the same material as the first hard-material portion 122 and the second hard-material portion 140, but is relatively deformable with an external force due to its small thickness. Accordingly, an upward or downward force is applied to the first hard-material portion 122 by the rotation of the adjustment member 160 and the deformable portion 130 is deformed in shape to allow the first hard-material portion 122 to moves upward or downward.

The deformable portion 130 is exemplified to have a linear shape connecting the first hard-material portion 122 and the second hard-material portion 140, but the shape thereof may be modified in various forms depending on the shapes and the relative position of the first hard-material portion 122 and the second hard-material portion 140.

A rotation groove 132 is formed in a connection part of the deformable portion 130 and the second hard-material portion 140. The rotation groove 132 is formed to decrease the thickness of the connection part of the deformable portion 130 and the second hard-material portion 140. The deformable portion 130 can freely rotate and/or be deformed with respect to the second hard-material portion 140 due to the rotation groove 132.

The deformable portion 130 may have a curved shape as well as a linear shape. That is, the deformable portion 130 has a curved shape (for example, a V shape, a U shape, or an S shape) as a whole or may have partially a curved shape.

The second hard-material portion 140 is formed at the outermost edge of the suction member 120 and has a ring shape. The second hard-material portion 140 has characteristics that the shape thereof is hardly deformed with an external force, similarly to the first hard-material portion 122. Accordingly, the second hard-material portion 140 serves to support the first hard-material portion 122 and the adjustment member 160 while the first hard-material portion 122 is moving upward by the rotation of the adjustment member 160.

The second hard-material portion 140 of the suction member 120 according to this embodiment is exemplified to be disposed obliquely, but the second hard-material portion 140 may be disposed vertically. The second hard-material portion 140 is exemplified to have a linear shape, but may have various shapes such as a curved shape.

As illustrated in FIGS. 5 and 6, a pressing end 144 corresponding to the connection end of the second hard-material portion 140 and the deformable portion 130 protrudes upward to come in contact with the adjustment member 160. Since the second hard-material portion 140 is not deformed or hardly deformed with an external force, the adjustment member 160 always comes in contact with the pressing end 144 while the first hard-material portion 122 is moving upward.

A packing insertion groove (not referenced by a reference sign) is formed at the lower end of the second hard-material portion 140. Packing 150 is inserted into the packing insertion groove. The packing 150 is closely attached to the attachment surface s such that air does not flow into the internal space of the suction member 120.

The packing 150 may be formed of a material such as an adhesive gel, urethane, silicon, rubber, or soft PVC, but the present invention is not limited by the material of the packing 150. The packing 150 may be formed of adhesive elastomer or adhesive polyurethane. In this case, it is possible to further improve air-tightness between the suction member 120 and the attachment surface s to enhance suction endurance.

The packing 150 can be coupled to the lower end of the second hard-material portion 140 using various methods. For example, the packing 150 may be fused onto or inserted into the lower end of the second hard-material portion 140 or may be integrally formed by double injection molding.

The adjustment member 160 can pull the first hard-material portion 122 of the suction member 120 upward by the rotation thereof to enlarge the internal volume of the suction member 120, thereby forming a vacuum chamber c. The adjustment member 160 can fix the position of the first hard-material portion 122 to maintain the formed vacuum chamber c, thereby maintaining a vacuum suction force.

The adjustment member 160 has a rectangular plate shape and a through-hole (not referenced by a reference sign) formed at the center thereof is screwed to the adjustment protrusion 124 of the first hard-material portion 122. Accordingly, the adjustment member 160 moves upward and downward in the length direction of the adjustment protrusion 124 by the rotation thereof.

As illustrated in FIGS. 5 and 6, the adjustment member 160 comes in contact with the pressing end 144 of the second hard-material portion 140. Accordingly, when the adjustment member 160 rotates in one direction in the state illustrated in FIG. 5, the adjustment member 160 does not move upward and downward but the first hard-material portion 122 having the adjustment protrusion 124 formed therein moves upward. In this way, when the first hard-material portion 122 moves upward, the adjustment member 160 is not changed in height by the rotation.

In a state in which the packing 150 of the second hard-material portion 140 comes in close contact with the attachment surface s and the inner space of the suction member 120 is air-tightly sealed, when the first hard-material portion 122 moves upward to the state illustrated in FIG. 6 by the rotation of the adjustment member 160, the vacuum chamber c is formed to generate a vacuum suction force. Accordingly, the vacuum adsorption apparatus 100 is brought into close contact with the attachment surface s.

In the vacuum adsorption apparatus 100 according to this embodiment, the adjustment member 160 and the adjustment protrusion 124 are screwed to each other and the first hard-material portion 122 moves upward by the rotation of the adjustment member 160. However, the present invention may employ various structures for upward and downward movement of the first hard-material portion 122. For example, a lever structure in which the adjustment protrusion 124 (where the thread 126 is not formed on the periphery of the adjustment protrusion) is made to move upward using a principle of leverage may be employed.

When the first hard-material portion 122 moves downward by the backward rotation of the adjustment member 160, the extra-low pressure state in the vacuum chamber c can be released to easily detach the vacuum adsorption apparatus 100 from the attachment surface s.

Now, usage of the vacuum adsorption apparatus 100 according to the first embodiment will be described with reference to FIGS. 5 and 6. FIG. 5 illustrates a state in which the first hard-material portion 122 does not move upward and FIG. 6 illustrates a state in which the first hard-material portion 122 moves upward by the rotation of the adjustment member 160 to form the vacuum chamber c.

Referring to FIG. 5, when the first hard-material portion 122 does not move upward, a gap between the bottom surface of the first hard-material portion 122 and the attachment surface s is h which is the minimum, and a gap between the bottom surface of the adjustment member 160 and the top surface of the first hard-material portion 122 is a which is the maximum.

In the state illustrated in FIG. 5, the bottom surface of the first hard-material portion 122 may come in contact with the attachment surface s.

When the suction member 120 is pressed down against the attachment surface s, the internal space of the suction member 120 is sealed by the packing 150 and the suction member 120 cannot rotate with respect to the attachment surface s by the frictional force of the packing 150. When the adjustment member 160 rotates in this state, the adjustment protrusion 124 screwed to the adjustment member 160 moves upward and pulls the first hard-material portion 122 upward. Accordingly, as illustrated in FIG. 6, the gap between the bottom surface of the first hard-material portion 122 and the attachment surface s is h' (>h) and the gap between the bottom surface of the adjustment member 160 and the top surface of the first hard-material portion 122 is a' (<a).

When the first hard-material portion 122 moves upward by the rotation of the adjustment member 160 in the state in which the internal space of the suction member 120 sealed, the internal space of the suction member 120 is enlarged to form the vacuum chamber c. A vacuum suction force is generated by the vacuum chamber c and thus the vacuum adsorption apparatus 100 comes in close contact with the attachment surface s. By changing a degree of rotation of the adjustment member 160, it is possible to adjust the vacuum suction force.

Even when the first hard-material portion 122 moves upward or downward, the second hard-material portion 140 is not deformed. Accordingly, the pressing end 144 corresponding to an end of the second hard-material portion 140 always has a constant height. Since the bottom surface of the adjustment member 160 is supported to have a constant height by the pressing end 144 and the through-hole (not referenced by a reference sign) formed at the center of the adjustment member 160 is coupled to the periphery of the adjustment protrusion 124, the adjustment member 160 can maintain the state illustrated in FIG. 6 by the frictional force.

When the adjustment member 160 is rotated in the opposite direction to detach the vacuum adsorption apparatus 100 from the attachment surface s, the first hard-material portion 122 moves downward to release the vacuum chamber c by the restoring force of the deformable portion 130. Accordingly, the vacuum suction force due to the vacuum chamber c is removed and thus the vacuum adsorption apparatus 100 can be easily detached from the attachment surface s.

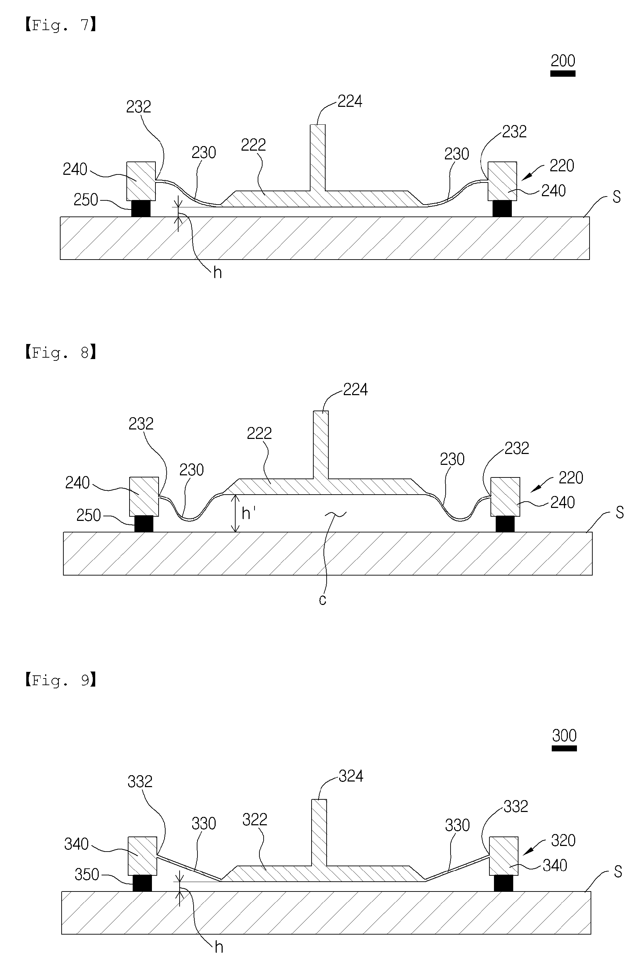

Now, a vacuum adsorption apparatus 200 according to a second embodiment of the present invention will be described with reference to FIGS. 7 and 8.

FIGS. 7 and 8 are cross-sectional views illustrating the vacuum adsorption apparatus 200 according to the second embodiment of the present invention, where FIG. 7 illustrates a state before a first hard-material portion 222 moves upward and FIG. 8 illustrates a state in which the first hard-material portion 222 has moved upward.

Referring to FIGS. 7 and 8, the vacuum adsorption apparatus 200 according to this embodiment includes a first hard-material portion 222 that is located at the center, a second hard-material portion 240 that constitutes a periphery, and a deformable portion 230 that connects the first hard-material portion 222 and the second hard-material portion 240. An adjustment protrusion 224 is formed to protrude upward from the center of the first hard-material portion 222. Packing 250 is formed on the bottom of the second hard-material portion 240.

The adjustment member 160 of the vacuum adsorption apparatus 100 according to the first embodiment can be coupled to the adjustment protrusion 224. The present invention is not limited by means for raising the first hard-material portion 222 and the first hard-material portion 222 can be raised by the principle of leverage.

The deformable portion 730 extends inside the second hard-material portion 240 and is connected to an end of the first hard-material portion 222 located at the center. In general, the deformable portion 230 can be integrally formed with the first hard-material portion 222 and the second hard-material portion 240 by plastic injection molding. The material of the deformable portion 230 is not stretched, but the shape thereof is deformed by an external force. The deformable portion 230 may have a thickness smaller than those of the first hard-material portion 222 and the second hard-material portion 240 so as to facilitate the deformation thereof.

Referring to FIG. 7, the deformable portion 230 has a curved shape when an external force is not applied thereto. At this time, the bottom surface of the first hard-material portion 222 is spaced apart by a height h from the attachment surface s, and this position corresponds to a position lower than a rotation point 232 corresponding to the connection point of the deformable portion 230 and the second hard-material portion 240.

When the first hard-material portion 222 moves upward in the state illustrated in FIG. 7, the first hard-material portion 222 and the second hard-material portion 240 are not deformed and the deformable portion 230 is deformed to allow the first hard-material portion 222 to move upward (see FIG. 8). The first hard-material portion 222 first hard-material portion 222 is spaced apart by h' (>h) from the attachment surface s and thus a vacuum chamber c is formed between the attachment surface s and the first hard-material portion.

When the external force is removed in the state illustrated in FIG. 8, the deformable portion 230 is deformed to an original shape by the restoring force of the deformable portion 230 as illustrated in FIG. 7, and thus the first hard-material portion 222 moves downward to the state illustrated in FIG. 7.

The bottom surface of the first hard-material portion 222 is lower than the rotation point 232 before the first hard-material portion 222 moves upward, but this configuration is only an example. The present invention is not limited by the initial position of the first hard-material portion 222. Accordingly, the first hard-material portion may be located higher than the rotation point 232 before the first hard-material portion moves upward.

The upward-moving first hard-material portion 222 is located slightly higher than the rotation point 232, but this configuration is only an example. The present invention is not limited by the upward-moving position of the first hard-material portion 222. Accordingly, the upward-moving first hard-material portion may be located at a height lower than or equal to the rotation point 232.

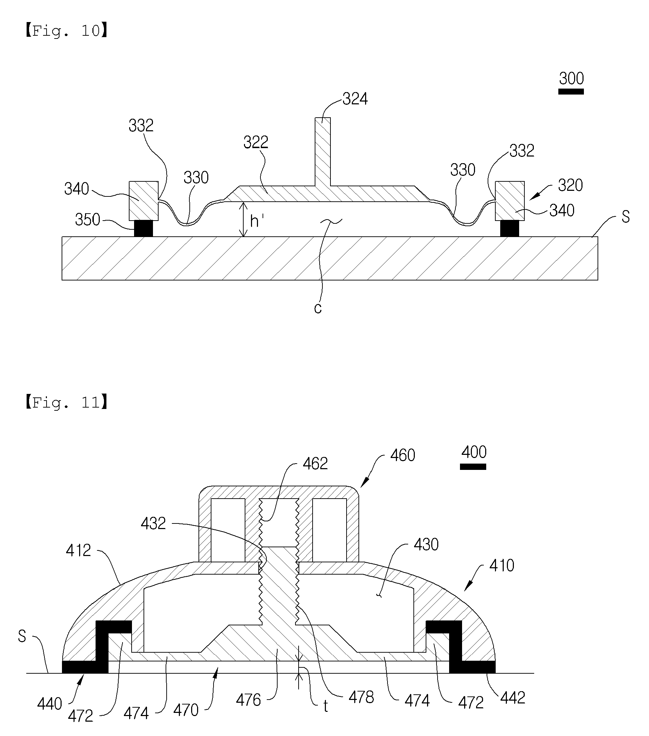

Now, a vacuum adsorption apparatus 300 according to a third embodiment of the present invention will be described with reference to FIGS. 9 and 10.

FIGS. 9 and 10 are cross-sectional views illustrating the vacuum adsorption apparatus 300 according to the third embodiment of the present invention, where FIG. 9 illustrates a state before a first hard-material portion 322 moves upward and FIG. 10 illustrates a state in which the first hard-material portion 322 has moved upward.

Referring to FIGS. 9 and 10, the vacuum adsorption apparatus 300 according to the third embodiment of the present invention includes a first hard-material portion 322, a deformable portion 330, a second hard-material portion 340, and packing 350, which are similar to the first hard-material portion 222, the deformable portion 230, the second hard-material portion 240, and the packing 250 of the vacuum adsorption apparatus 200 according to the second embodiment and thus specific description thereof will not be repeated. The deformable portion 330 of the vacuum adsorption apparatus 300 according to this embodiment is characterized by having a linear shape when an external force is not applied thereto.

Referring to FIG. 9, the deformable portion 330 has a linear shape which is not deformed when an external force is not applied thereto. When an external force is applied vertically upward, the deformable portion 330 is deformed in a curved shape as illustrated in FIG. 10 to allow the first hard-material portion 322 to move upward. The first hard-material portion 322 moves upward from a height h to a height h' (>h) with respect to an attachment surface s, whereby a vacuum chamber c is formed between the attachment surface s and the first hard-material portion.

In the vacuum adsorption apparatuss 200 and 300 according to the second embodiment and the third embodiment, the packing 250 and 350 that is mounted on or attached to the bottoms of the second hard-material portions 240 and 340 may be attached in a rubber or gel type or may be integrally formed by double injection molding. The thicknesses of the second hard-material portions 240 and 340 may be set to be equal to or greater than those of the deformable portions 230 and 330, but the present invention is not limited thereto.

A vacuum adsorption apparatus (400) according to a fourth embodiment of the present invention will be described below with reference to FIGS. 11 to 15.

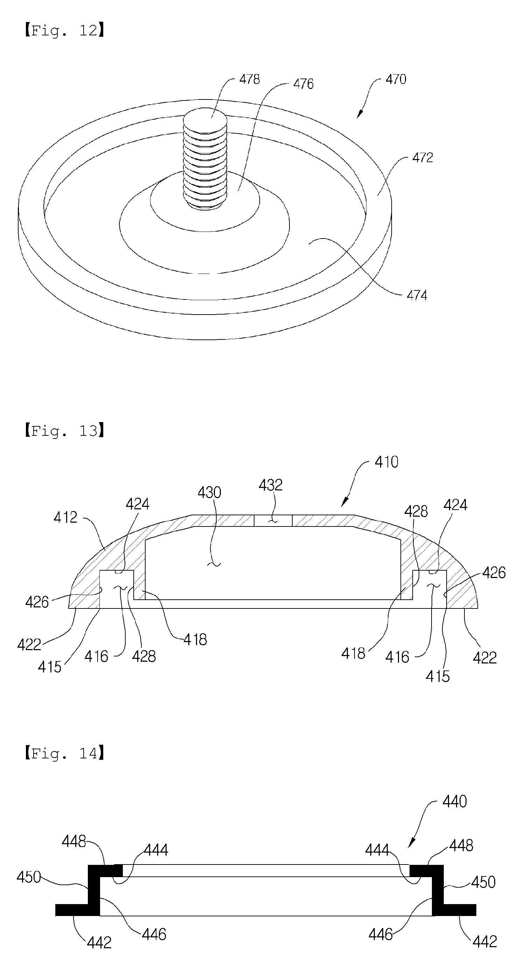

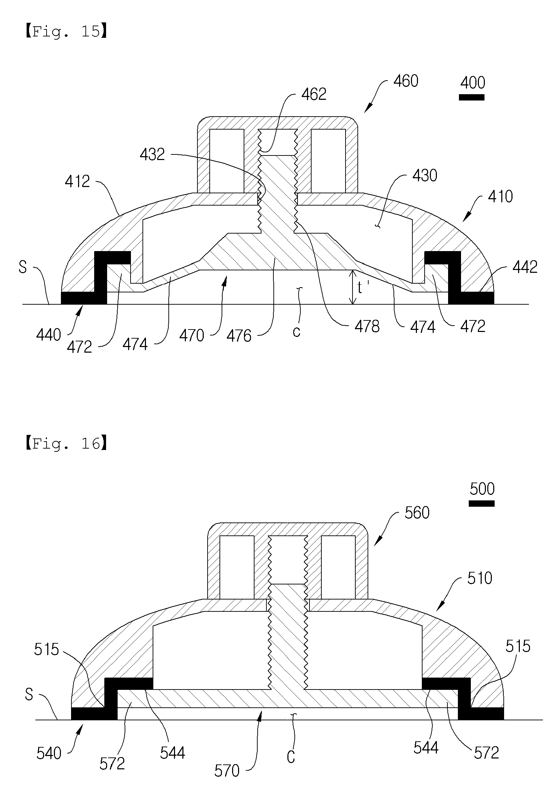

FIG. 11 is a cross-sectional view illustrating a vacuum adsorption apparatus 400 taken according to the fourth embodiment of the present invention. FIG. 12 is a perspective view illustrating a suction portion 470 of the vacuum adsorption apparatus 400 illustrated in FIG. 11. FIG. 13 is a cross-sectional view illustrating a cap 410 of the vacuum adsorption apparatus 400 illustrated in FIG. 11. FIG. 14 is a cross-sectional view illustrating a packing 440 of the vacuum adsorption apparatus 400 illustrated in FIG. 11. FIG. 15 is a cross-sectional view illustrating a state in which the suction portion 470 moves upward from the state illustrated in FIG. 11 to form a vacuum chamber c.

The vacuum adsorption apparatus 400 according to the fourth embodiment includes a cap 410 that forms an outer body and includes a packing stop 415 therein, a packing 440 that is located in the packing stop 415 and comes in contact with an attachment surface s, a suction portion 470 that includes a pressing end 472 for pressing the packing 440 located in the packing stop 415 and is brought into vacuum-suction contact with the attachment surface s by a vacuum chamber c formed therein, and a pressing portion 460 that is coupled to the suction portion 470 and causes the suction portion 470 to move upward to form the vacuum chamber c.

The vacuum adsorption apparatus 400 according to the fourth embodiment is characterized in that the packing 440 located in the packing stop 415 is pressed upward and outward by the pressing end 472 having a pressing protrusion shape of the suction portion 470 and thus is not easily detached from a packing groove 416 formed in the packing stop 415. Accordingly, in the vacuum adsorption apparatus 400 according to this embodiment, it is not necessary to leave a gel free after applying the gel in order to couple the packing 440 to the packing groove 416 or it is not necessary to couple the packing 440 to the packing groove 416 using an adhesive. As a result, according to the vacuum adsorption apparatus 400 of this embodiment, it is possible to reduce manufacturing costs and a unit price thereof.

The suction portion 470 including a pressing end 472, a deformable section 474, a hard-material section 476, and a fastening protrusion 478 can be integrally formed of the same material. For example, the suction portion 470 can be integrally formed by injection molding using a plastic resin. By this configuration of the suction portion 470, according to the vacuum adsorption apparatus 400 of this embodiment, it is possible to reduce manufacturing cost and a unit prices thereof.

The cap forms an outer body of the vacuum adsorption apparatus 400 and has a dome shape. The packing 440 and the suction portion 470 are disposed in the cap 410. The pressing portion 460 and a hook 414 are disposed outside the cap. The cap 410 includes a packing groove 416, an internal space 430, and a through-hole 432.

The packing stop 415 is formed along an inner circumference of the cap 410 and is higher from an attachment surface s than a cap end 422. A horizontal outer surface 448 and a vertical outer surface 450 of the packing 440 come in contact with the packing stop 415. An inner protrusion 418 protrudes downward from one side of the packing stop 415. The packing groove 416 is formed in the packing stop 415 by the inner protrusion 418.

The packing groove 416 is a groove which is formed along the circumference of the cap 410 and includes a top surface 424, an outer surface 426, and an inner surface 428. The inner surface 428 is formed by the inner protrusion 418. The bottom of the inner protrusion 418 can be formed to be higher from the attachment surface s than the cap end 422.

The bottom of the inner protrusion 418 can be formed to be lower than or flush with the cap end 422. The packing 440 coming in contact with the attachment surface s can be coupled to the cap end 422. The packing groove 416 may not include the inner protrusion 418.

As illustrated in FIG. 14, all the top surface 424, the outer surface 426, the inner surface 428, and the cap end 422 of the packing groove 416 come into contact with the packing 440.

The pressing end 472 of the suction portion 470 as well as the packing 440 is inserted into the packing groove 416. The pressing end 472 presses the packing 440 upward and outward when the suction portion 470 moves upward to form the vacuum chamber c. Accordingly, the packing 440 is not easily detached from the packing groove 416.

The cap 410 includes the internal space 430 therein. The deformable section 474, the hard-material section 476, and the fastening protrusion 478 of the suction portion 470 are located in the internal space 430. Referring to FIG. 15, the deformable section 474, the hard-material section 476, and the fastening protrusion 478 move upward to bring the vacuum adsorption apparatus 400 into vacuum-suction contact with the attachment surface s, and the internal space 430 provides a space enabling the suction portion 470 to move upward.

The through-hole 432 is formed at the center of the outer surface 412 of the cap 410. The fastening protrusion 478 of the suction portion 470 protrudes outward from the cap 410 via the through-hole 432. The fastening protrusion 478 protruding outward from the cap 410 is screwed to the pressing portion 460. The fastening protrusion 478 can move upward and downward without interfering with the through-hole 432.

The cap 410 of the vacuum adsorption apparatus 400 according to the fourth embodiment is exemplified to have a circular dome shape, but the present invention is not limited by the shape of the cap. Accordingly, the cap of the present invention may have various shapes such as a rectangular shape or an elliptical shape.

The suction portion 470 is made to move upward by the pressing portion 460 to form the vacuum chamber c between the attachment surface s and the suction portion. The cap 410, the packing 440, and the pressing portion 460 as well as the suction portion 470 are brought into vacuum-suction contact with the attachment surface by the vacuum chamber c. The suction portion 470 includes the pressing end 472, the deformable section 474, the hard-material section 476, and the fastening protrusion 478 from the outermost.

The pressing end 472, the deformable section 474, the hard-material section 476, and the fastening protrusion 478 of the suction portion 470 can be integrally formed by injection molding using plastics.

The pressing end 472 corresponding to a pressing protrusion formed around the suction portion 470 and has a thickness larger than that of the deformable section 474. The pressing end 472 is inserted into the packing groove 416 of the cap 410 and constantly comes in contact with the top surface 424 and the inner surface 428 of the packing 440. As illustrated in FIG. 11, since the suction portion 470 maintains a state coupled to the pressing portion 460, the pressing end 472 is not detached from the packing groove 416 but is constantly located therein. Accordingly, the packing 440 is not detached from the packing groove 416 but is constantly located therein.

As illustrated in FIG. 15, when the vacuum adsorption apparatus 400 is brought into vacuum-suction contact with the attachment surface s, the pressing end 472 presses the top surface 424 of the packing 440 upward and pressing the inner surface 428 outward with the upward movement of the suction portion 470. By the pressing of the pressing end 472 against the packing 140, the packing 440 is more strongly coupled to the cap 410 when vacuum suction is generated.

The inner circumferential surface of the pressing end 472 is hooked to the inner protrusion 418. Accordingly, even when the fastening protrusion 478 and the hard-material section 476 move upward with the rotation of the pressing portion 460, the pressing end 472 is constantly located in the packing groove 416. Since the pressing end 472 is hooked to the inner protrusion 418, only the deformable section 474, the hard-material section 476, and the fastening protrusion 478 of the suction portion 470 move upward with the rotation of the pressing portion 460.

The pressing end 472 inserted into the packing groove 416 can elastically press the packing 440 to elastically deform the packing 440.

The deformable section 474 corresponds to a part which is formed to be thinner than the other part of the suction portion 470 and which is easily deformable. One end of the deformable section 474 is connected to the pressing end 472 and the other end thereof is connected to the hard-material section 476. The fastening protrusion 478 moves upward with the rotation of the pressing portion 460 as illustrated in FIG. 15, which is allowed by deformation of the deformable section 474.

The hard-material section 476 corresponds to a part which is not or hardly deformed with the upward moving force of the pressing portion 460 and which is formed to be thicker than the deformable section 474. The fastening protrusion 478 protrudes upward from the center of the top surface of the hard-material section 476. When the vacuum chamber is not formed as illustrated in FIG. 11, the gap between the hard-material section 476 and the attachment surface s corresponds to t. When the gap between the suction portion 470 and the attachment surface s increases to t' (>t), the vacuum chamber c is formed between the attachment surface s and the suction portion.

The hard-material section 476 can be formed of a hard material such as plastic or metal. The hard-material section 476 and the pressing portion 460 can be coupled with a variety of fixing such as pin fixing or integral forming.

The fastening protrusion 478 protrudes upward from the hard-material section 476 and a part thereof protrudes outward from the cap 410 via the through-hole 432. The pressing portion 460 is screwed to the fastening protrusion 478 protruding outward from the cap 410. The fastening protrusion 478 has a cylindrical shape and threads are formed on the circumferential surface thereof. The threads formed on the circumferential surface of the fastening protrusion 478 are screwed to threads 462 formed on the inner circumferential surface of the pressing portion 460.

In this embodiment, the suction portion 470 is formed in a circular shape, but the present invention is not limited by the shape of the suction portion. The suction portion of the present invention may have various shapes such as a rectangular shape and an elliptical shape.

The pressing portion 460 is located on the top of the cap 410 and causes the suction portion 470 to move upward and downward by screwing to the fastening protrusion 478. When the suction portion 470 moves upward, the vacuum chamber c enabling the vacuum suction is formed between the suction portion 470 and the attachment surface s.

The pressing portion 460 is placed on the top surface of the cap 410 enables the fastening protrusion 478 to move upward and downward without changing the height thereof even with the rotation thereof. That is, when the pressing portion 460 rotates in one direction, the pressing portion 470 including the fastening protrusion 478 screwed to the pressing portion 460 moves upward and thus the vacuum chamber c is formed between the suction portion 470 and the attachment surface s. On the other hand, when the pressing portion 460 rotates in the opposite direction, the pressing portion 470 including the fastening protrusion 478 moves downward and thus the vacuum chamber c is removed to release the vacuum-suction state.

In the vacuum adsorption apparatus 400 according to the fourth embodiment, the suction portion 470 moves upward to form the vacuum chamber c by screwing of the fastening protrusion 478 to the pressing portion 4670, but the present invention may employ any structure as long as the structure can cause the suction portion 470 to move upward. For example, the suction portion 470 may be made to move upward and downward by the pressing portion having a lever structure or the pressing portion having an assembly structure. The pressing portion may have various shapes such as a bar shape as well as the cap shape as in the fourth embodiment.

When the suction portion 470 moves downward with the rotation of the pressing portion 460 in the opposite direction and air having flown into the vacuum chamber c flows out between the attachment surface s and the suction portion 470, the vacuum adsorption apparatus 400 can be easily detached from the attachment surface s.

The packing 440 corresponds to a part which is coupled to the bottom of the cap 410 to come in contact with the attachment surface s. flowing of air into a space between the attachment surface s and the bottom surface of the suction portion 470 can be intercepted by the packing 440 to form the vacuum chamber c.

The packing 440 can be formed of various materials such as silicon, urethane, and PVC. The packing 440 includes a contact surface 442 coming into contact with the attachment surface s, a horizontal inner surface 444, a vertical inner surface, a horizontal outer surface 448, and a vertical outer surface 450.

The packing 440 of this embodiment has a ring shape, but the present invention is not limited by the shape of the packing 440. Accordingly, the packing of the present invention can have various shapes depending on the shape of the cap 410 or the suction portion 470 or the shape of the packing groove 416.

The contact surface 442 is attached to the cap end 422 to come into contact with the attachment surface s.

The horizontal inner surface 444 and the vertical inner surface 446 come into contact with the pressing end 472 of the suction portion 470. With the upward movement of the suction portion 470 due to the rotation of the pressing portion 460, the horizontal inner surface 444 of the packing 440 is pressed upward by the pressing end 472 and the vertical inner surface 446 is pressed outward by the pressing end 472. Accordingly, the packing 440 is not detached from the packing groove 416 but is constantly located therein.

The horizontal outer surface 448 and the vertical outer surface 450 form the outer surface of the packing 440 and come into contact with the inner surface of the packing groove 416. The horizontal outer surface 448 and the vertical outer surface 450 can be bonded and fixed to the inside of the packing groove 416 with an adhesive, but cannot be detached from the packing groove 416 but be constantly located in the packing groove 416 by the pressing end 472 without using the adhesive.

The packing 440 may be formed of a single material, or may be formed of two materials having different hardness levels. For example, the packing 440 can be manufactured by heterojunction, insert molding, or the like such that a part inserted into the packing groove 416 and a part coming into contact with the attachment surface s have different hardness levels. A viscous material such as silicon or urethane can be applied to the part of the packing 440 coming into contact with the attachment surface s.

A vacuum adsorption apparatus 500 according to a fifth embodiment of the present invention will be described below with reference to FIG. 16.

FIG. 16 is a cross-sectional view of the vacuum adsorption apparatus 500 according to the fifth embodiment of the present invention.

Referring to FIG. 16, the vacuum adsorption apparatus includes a cap 510 that includes a packing stop 515, a packing 540 that comes into contact with the packing stop 515 and an attachment surface s, a hard suction portion 570 that includes a pressing end 572 for pressing the packing 540 located in the packing stop 515, and a pressing portion 560 that causes the suction portion 570 to move upward. The vacuum adsorption apparatus 500 according to this embodiment is characterized in that the suction portion 570 moves upward to form a vacuum chamber c between the attachment surface s and the suction portion by causing the pressing end 572 to press the packing 540 to contract.

The suction portion 570 can be formed of a hard material which is not deformed or hardly deformed when the suction portion moves upward with the rotation of the pressing portion 560. The hard suction portion 570 moves upward with the rotation of the pressing portion 560 such that the pressing end 572 thereof can press the packing 540 upward to contract. The pressing portion 572 can move upward due to the contraction of the packing 540 and thus the vacuum chamber c is formed between the attachment surface s and the suction portion.

While embodiments of the present invention have been described above, it will be understood by those skilled in the art that the present invention can be modified in various forms without departing from the concept and the scope of the present invention which are described in the appended claims.

## Claims

1. A vacuum adsorption apparatus comprising:
a suction member that is brought into vacuum-suction contact with an attachment surface by a vacuum chamber formed therein; and
an adjustment member that is coupled to the suction member to form the vacuum chamber,
wherein the suction member includes a first hard-material portion that is coupled to the adjustment member and that is raised by the adjustment member, a deformable portion of which one end is connected to an end of the first hard-material portion and that is deformable in shape, and a second hard-material portion that is connected to the other end of the deformable portion to support the deformable portion and is located outside the first hard-material portion.

2. The vacuum adsorption apparatus according to claim 1, wherein an adjustment protrusion is formed to protrude from the first hard-material portion, and
the adjustment member is coupled to the adjustment protrusion by a screw of a pin or is integrally formed with the adjustment protrusion by injection molding.

3. The vacuum adsorption apparatus according to claim 1, wherein the deformable portion has a thickness smaller than that of the first hard-material portion or the second hard-material portion so as to be deformable in shape.

4. The vacuum adsorption apparatus according to claim 1, wherein the first hard-material portion, the deformable portion, and the second hard-material portion are integrally formed of the same material by injection molding.

5. The vacuum adsorption apparatus according to claim 1, wherein an end of the suction member is coupled to packing or coated with a gel.

6. The vacuum adsorption apparatus according to claim 1, wherein the deformable portion is connected to the second hard-material portion via a rotation point and the first hard-material portion is located lower than the rotation point.

7. The vacuum adsorption apparatus according to claim 1, wherein the deformable portion is connected to the first hard-material portion and has a curved shape.

8. A vacuum adsorption apparatus comprising:
a cap that includes a packing stop;
a packing that comes in contact with the packing stop and an attachment surface;
a suction portion that includes a pressing end for pressing the packing located in the packing stop and that is brought into vacuum-suction contact with the attachment surface by a vacuum chamber formed between the attachment surface and the pressing portion; and
a pressing portion that causes the suction portion to move upward to form the vacuum chamber.

9. The vacuum adsorption apparatus according to claim 8, wherein the suction portion presses the packing upward and outward.
